# EUROPEAN PATENT APPLICATION

(11) **EP 2 031 737 A1**
(43) Date of publication of application: **04.03.2009**
(21) Application number: 07301331.0
(22) Date of filing: 30.08.2007
(51) Int. Cl.: H02K 5/128, H02K 29/08

(54) **Brushless electric motor and electric pump**

(71) Applicant: Alcatel Lucent, 75008 Paris (FR)
(72) Inventor: Winterhalder, Andreas, 79822 Titisee-Neustadt (DE)
(74) Representative: Brose, Gerhard

(57) **Abstract**

The invention relates to a brushless electric motor with a rotor (R) assembled with permanent magnets, a stator performed with coils (SC), at least one magnetic field sensor (HS) for sensing the actual position of the rotor (R), and with a control circuit (PCB) for supplying the coils of the stator with current in due time, where between the rotor (R) and the stator (SC) a mug-shaped housing (NME) is located, being closed by a base versus the control circuit (PCB) and the at least one magnetic field sensor (HS), that the mug-shaped housing (NME) is made out of a non-magnetic material, and that the at least one magnetic field sensor (HS) is arranged outside the mug-shaped housing (NME) at the base thereof. The invention further relates to an electric pump.

## Description

The invention relates to a brushless electric motor according to the preamble of claim 1 and to an electric pump according to the preamble of claim 2.

Electric DC motors always have a fixed part, the stator, and a rotating part, the rotor. Either of these parts is assembled with permanent magnets, the other one is assembled with coils. There are principally two kinds of such electric DC motors.

In order that the rotor will rotate, the electro-magnetic field provided by the coils has to rotate too. And it has to rotate with the same rotation speed as the rotor does.

The conventional solution is to have the coils on the rotor and to reverse the polarity by means of a collector in combination with brushes. This also is the cheapest solution, but has disadvantages like brush sparking or abrasion.

A modern solution is to have the coils on the stator and to reverse the polarity by means of electronic circuits including power electronic switches. This solution necessarily needs to know the actual position of the rotor. A widespread solution to this is the use of magnetic field sensors, mostly Hall sensors, to sense the rotating magnetic field of the rotor.

It is also known, e.g. from EP 1 170 903 A2, to operate brushless motors without sensors. But such solution is very inflexible, because it has to be adjusted to all motor parameters like inertia or inductivity.

The article "Machine-mounted control takes material handling to new level of efficiency" by Tom Wolff, published in "Control Solutions", January 2003, vol. 76, pages 38 - 41, shows a modular materials handling system. This article also shows that even mere mechanical problems like housings are of high importance to the construction of electric motors.

Problems like protection against accidental contact, dust protection, or protection against ingress of water, are of high importance.

The problem underlying this invention arose with designing electric motors for pumps. The solution is applicable to all kinds of problems as mentioned above.

The problem is solved by a brushless electric motor according to the teaching of claim 1, and by an electric pump according to the teaching of claim 2.

In principle we thus have a mere static part including electronics, coils, and all other sensitive parts, that can be even hermetically sealed, if necessary. Likewise in principle the non-stationary parts of the motor, like rotor, ball bearings, and output shaft, can be made part of the driven apparatus, in our example the wheel of a pump. The latter of course are exposed to the fluid and must withstand this.

Further embodiments of the invention are to be found in the description.

In the following the invention will be described with the aid of the accompanying drawing:

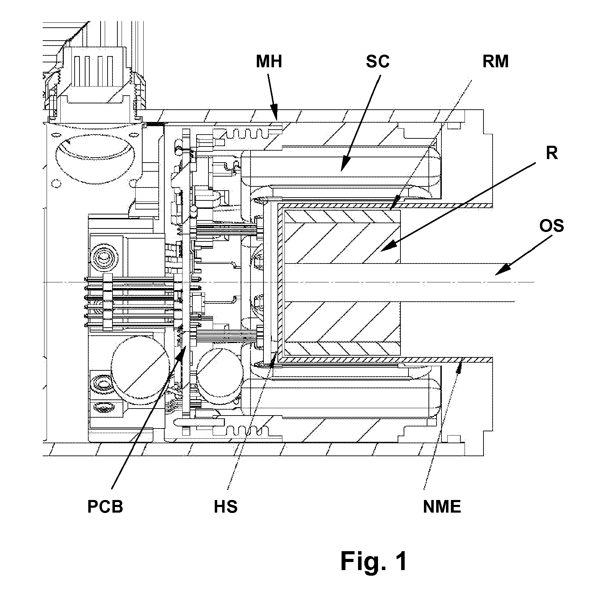

Figure 1 shows a sectional view of a brushless electric motor according to the invention.

The sectional view shown in figure 1 first of all shows normal parts of a brushless electric motor, like a motor housing MH, stator coils SC, a printed circuit board PCB, and a Hall sensor HS for sensing the position of a rotor. It also shows such rotor R with rotor magnets RM and with an output shaft OS. In contrast to what is usual with ordinary brushless electric motors, rotor R and output shaft OS are not born in a bearing, normally a ball bearing, lying in the area where the printed circuit board PCB is situated. The bearings than have to be single-sided at the other end of the output shaft OS.

Main element of the brushless electric motor according to the invention is a between the rotor R with the rotor magnets RM and the stator coils SC. This mug-shaped housing of course has to be non-magnetic, thus building a non-magnetic enclosure NME.

As this housing NME anyway has to be non-magnetic, the necessary electromagnetic field sensor, in the example the Hall sensor HS, can easily be arranged outside this housing NME.

Such mug-shaped housing NME can easily be made out of any applicable plastic material. At the top of such mug therefor it is easy to arrange a flange for fitting to the motor housing MH and thus closing the same. Then the non-magnetic enclosure NME mainly would have the shape of a top hat.

In principle the bottom of this mug (or the top of this top hat) could have a recess for holding a ball bearing for bearing the rotor R with its output shaft OS. In this case the mug-shaped housing NME would have to have the necessary stability to carry such bearing. If the demands for tightness are not too high, therefor an opening for the output shaft can be foreseen in the bottom of the mug, and the bearing arranged outside thereof.

If such brushless electric motor is made part of an electric pump according to the invention, than the sealing is of no problem. Motor part and pump part then may be flanged together at the output shaft's side.

## Claims

1. Brushless electric motor with a rotor (R) assembled with permanent magnets, a stator performed with coils (SC), at least one magnetic field sensor (HS) for sensing the actual position of the rotor (R), and with a control circuit (PCB) for supplying the coils of the stator with current in due time, **characterized in, that** between the rotor (R) and the stator (SC) a mug-shaped housing (NME) is located, being closed by a base versus the control circuit (PCB) and the at least one magnetic field sensor (HS), that the mug-shaped housing (NME) is made out of a non-magnetic material, and that the at least one magnetic field sensor (HS) is arranged outside the mug-shaped housing (NME) at the base thereof.

2. Electrical pump with an electric motor, an impeller or wheel and a pump housing, **characterized in, that** the electric motor is a brushless electric motor according to claim 1, and that the rotor of the electric motor is permanently combined with the impeller or wheel.
